## Europäisches Patentamt
## European Patent Office
## Office européen des br... ..

(19)

(11) Veröffentlichungsnummer: **0 293 393**
**B1**

(12) **EUROPÄISCHE PATENTSCHRIFT**

(45) Veröffentlichungstag der Patentschrift: **28.11.90**

(51) Int. Cl.⁵: **B 60 T 8/60**

(21) Anmeldenummer: **87902472.7**

(22) Anmeldetag: **25.03.87**

(86) Internationale Anmeldenummer:
**PCT/EP87/00167**

(87) Internationale Veröffentlichungsnummer:
**WO 87/05872 08.10.87 Gazette 87/22**

(54) ANTIBLOCKIERREGELSYSTEM.

(30) Priorität: **26.03.86 DE 3610186**

(43) Veröffentlichungstag der Anmeldung:
**07.12.88 Patentblatt 88/49**

(45) Bekanntmachung des Hinweises auf die
Patenterteilung:
**28.11.90 Patentblatt 90/48**

(84) Benannte Vertragsstaaten:
**AT DE FR GB IT SE**

(56) Entgegenhaltungen:
**DE-A-3 426 665**
**GB-A-2 151 732**

(73) Patentinhaber: **ROBERT BOSCH GMBH**
**Postfach 50**
**D-7000 Stuttgart 1 (DE)**

(72) Erfinder: **BRASCHEL, Volker**
**Goethestr. 1**
**D-7100 Heilbronn (DE)**
Erfinder: **SEITZ, Dieter**
**In der Aue 18**
**D-7141 Schwieberdingen (DE)**

(74) Vertreter: **Kammer, Arno**
**Postfach 10 56 08 Grenzhöfer Weg 36**
**D-6900 Heidelberg 1 (DE)**

EP 0 293 393 B1

## Beschreibung

Die Erfindung betrifft ein Antiblockierregelsystem mit den Merkmalen des Oberbegriffs des Anspruchs 1.

Beim Befahren von Schlechtwegstrecken erfolgt ein dauernder Wechsel zwischen Be- und Entlastung der Räder. Damit ergibt sich bei Bremsungen eine schnelle Folge von starken Radumfangsverzögerungen und Radumfangsbeschleunigungen. Die ABS-Elektronik bewirkt dadurch eine häufige Bremsdruckabsenkung. Dies führt zu einer Unterbremsung des Fahrzeugs.

Es ist zur Vermeidung dieses Nachteils bekannt, für eine bestimmte Zeit nach Beendigung der Wiederbeschleunigung eines Rades den erneuten Druckabbau für dieses Rad zu unterdrücken.

Außerdem ist es bekannt, bei großen Raumfangsbeschleunigungen einen schnellen Druckaufbau auszulösen, der die vorhergegangene Druckabsenkung wieder ausgleichen soll.

Eine Erhöhung des Bremsdrucks während der Wiederbeschleunigungsphase des Rades ist in den meisten Fällen nicht in ausreichendem Umfang möglich, da auch auf homogenen Fahrbahnen starke Wiederbeschleunigungen vorkommen, die bei so schneller Drucksteigerungen, wie sie auf Schlechtwegstrecken erforderlich wären, zu unerwünschten Resonanzanregungen führen können.

Es ist weiter bekannt (GB—A—2151732), in der Wiederbeschleunigungsphase eines Rads die maximale Radbeschleunigung festzustellen und die Schwelle für die Druckabsenkung in Abhängigkeit von der Größe dieser Radbeschleunigung zu erhöhen.

Demgegenüber erschwert die erfindungsgemäße Lösung die Druckabsenkung in Abhängigkeit von der Höhe des Summenwertes, der gemäß den Merkmalen des Anspruchs 1 gebildet wird und erhöht insbesondere die Schwellen für die Druckabsenkung.

Erfolgt nach einer Instabilitätserkennung (Druckhalten oder -abbau) eine deutliche Wiederbeschleunigung des Rades, so wird z.B. ein Rückwärtszähler um einen bestimmten Betrag erhöht. Dieser Zähler ist insbesondere für mehrere oder alle Räder eines Fahrzeuges gemeinsam und kann somit von allen Rädern die durch diesen Zähler beeinflußt werden erhöht werden. Der Zähler wird laufend nach einer bestimmten Funktion zurückgezählt. Im einfachsten Fall handelt es sich dabei um eine lineare Funktion. Das Zurückzählen kann unter bestimmten Bedingungen auch gesperrt werden.

Es ist auch möglich, für jedes Rad einen getrennten Zähler vorzusehen. Dabei steigt jedoch der Aufwand und die Wirksamkeit wird geringer.

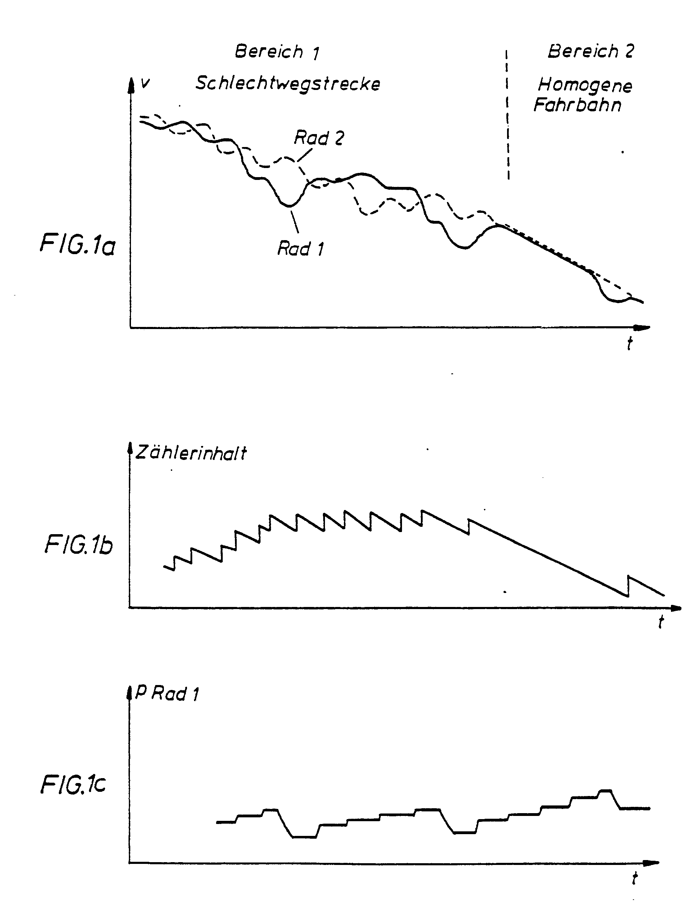

Der Zählerinhalt gibt nun an, um wieviel die Kriterien für eine Instabilitätserkennung erhöht werden, also um wieviel z.B. die Schwellen erhöht werden. Die Fig. 1 a bis 1c zeigen an einem Beispiel, bei dem zwei Räder 1 und 2 den Zähler erhöhen können, wie sich der Zählerstand verändert, wenn die Bremsung zunächst auf einer Schlechtwegstrecke (Bereich I) und danach auf einer homogenen Fahrbahn (Bereich II) erfolgt. Durch die Berücksichtigung des Zählerstandes bei der Erkennung von Instabilitäten werden fälschliche Druckabbauten vermindert. Auf homogenen Fahrbahnen wird eine Instabilität jedoch frühzeitig erkannt und die Druckabsenkung rechtzeitig eingeleitet. Fig. 1a zeigt die Verläufe der Radgeschwindigkeiten Fig. 1b der Verlauf des Zählerinhalts und Fig. 1c den Druckverlauf am Rad 1. Man erkennt, daß im Bereich I eine sehr viel größere Radverzögerung bzw. ein höherer Schlupfwerte zu einer Druckabsenkung führt als ein Bereich II.

Der Betrag um den der Zähler erhöht wird, kann fest vorgegeben sein oder von verschiedenen Dingen wie z.B. der Fahrzeugverzögerung abhängen. Außerdem kann der Zähler nach verschiedenen Funktionen leergezählt werden.

Bei hohen Regelfrequenzen, wie sie für Schlechtwegstrecken typisch sind, wird bei der Erfindung die Instabilitätsgrenze sehr schnell erhöht. Dies gilt besonders, wenn alle Räder eines Rahrzeuges einen gemeinsamen Zähler beeinflussen.

Würde man beim Stand der Technik die Sperrzeit für die Druckabsenkung höher wählen, hätte dies zur folge, daß auch auf homogenen Fahrbahnen bereits bei einem einmaligen schnellen Wechsel von Beschleunigung und Verzögerung eine Instabilität sehr spät erkannt würde und das betroffene Rad sehr hohe Schlupfwerte annimmt.

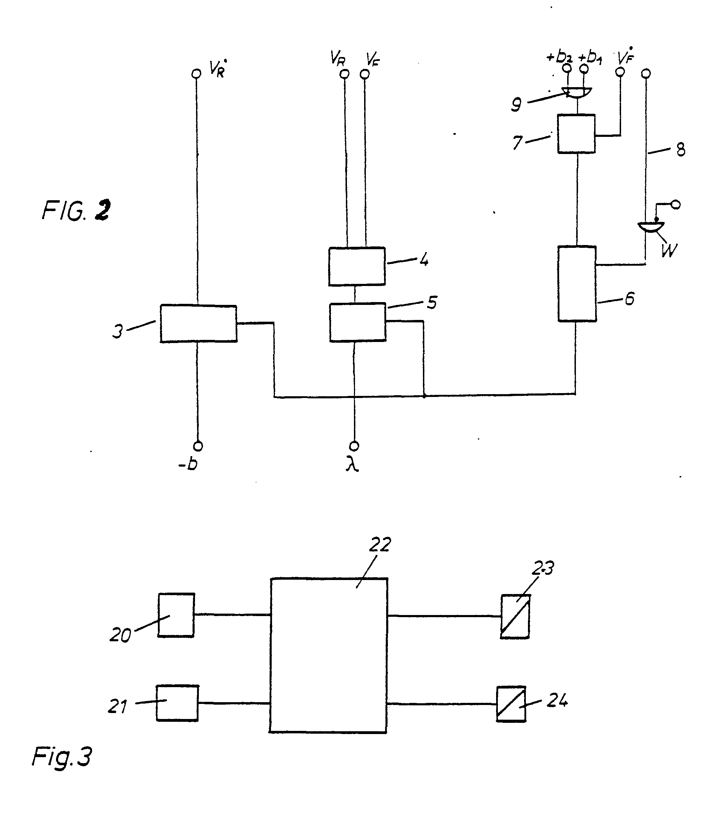

Fig. 2 zeigt ein Wirkschaltbild. Dort wird ein der Radbeschleunigung entsprechendes Signal $v_R$ einer Schwellwertstufe 3, je ein der Radgeschwindigkeit VR und der Fahrzeuggeschwindigkeit VF entsprechendes Signal einem Vergleicher 4 mit nachgeschalteter Schwellwertstufe 5 zugeführt. Diese Schwellwertstufen 3 und 5 geben ab einer bestimmten Verzögerung bzw. einen bestimmten Schlupf, ein -b-Signal, bzw. ein $\lambda$-Signal ab. Die Schwellen der Schwellenwertstufen 3 und 5 sind variabel und werden aufgrund des Standes eines Rückwertszählers 6 variert, dem ab Auftreten einer bestimmten Beschleunigung an den Rädern (Signal +b) ein Zahlenwert auf einem Glied 7 positiv zugeführt wird und der über eine Impulsfolge auf Leitung 8 laufend zurückgezählt wird. Bei besonderen Situationen, z.B. bei Auftreten eines Schlupfs an mehreren Rädern, kann die Impulsfolge auf Leitung 8 mittels eines Und-Gatters 10 auch zeitweise gesperrt werden. Der Zahlenwert kann von der Fahrzeugverzögerung $v_F$ abhängig sein; ein entsprechendes Signal wird dem Glied 7 zugeführt. Ein Oder-Glied 9 soll andeuten, daß der Zähler 6 durch die +b-Signale mehrerer Räder ($+b_1$, $+b_2$) erhöht werden kann. Anstelle der Schwellen der Schwellwertstufen 3 und 5 kann auch ein Instabilitätskriterium variiert werden, das bei einer gemeinsamen—quasianalogen—Auswertung von Schlupf und Radumfangsbeschleunigung, d.h. erst nach Addition derer noch gewichteten Werte wird eine Schwelle überwacht, die Ansteuerung der Ventile auslöst.

Die Schaltung gemäß Fig. 2 ist Teil der Auswerteschaltung eines Antiblockierreglers, wie er prinzipiell in Fig. 3 dargestellt ist. Einer Auswerteschaltung 22 die in diesem Beispiel nur 2 Regelkanäle beinhaltet, werden die Signale der Radgeschwindigkeitsmeßwertgeber 20 und 21 zugeführt, die daraus Bremsdrucksteuersignale für die Ventile 23 und 24 erzeugt.

**Patentansprüche**

1. Antiblockierregelsystem mit Meßwertgebern, einer Auswerteschaltung und einer Bremsdrucksteueranordnung, die eine Variation des Bremsdrucks in Abhängigkeit vom Radbewegungsverhalten bewirken, wobei Druckabsenkungen, die aufgrund von in schneller Folge auftretenden Radverzögerungen und Radbeschleunigungen auftreten, dadurch erschwert werden, daß die Schwelle für die Druckabsenkung in Abhängigkeit von der Radbeschleunigung erhöht werden, dadurch gekennzeichnet, daß ein Summierglied (6) vorgesehen ist, dem jeweils bei Auftreten einer Radbeschleunigung wenigstens vorgegebener Größe nach einer Instabilitätserkennung ein Zahlenwert zugeführt wird, daß diese Zahlenwerte aufaddiert und der jeweilige summenwert nach einer vorgegebenen Funktion erniedrigt wird und daß die Größe der jeweils vorhandenen Summe ein Maß für die Höhe der Schwllen für den von Radverzögerung und/oder Radschlupf ausgelösten Druckabbau darstellt.

2. Antiblockierregelsystem nach Anspruch 1, dadurch gekennzeichnet, daß das Summierglied ein Rückwärtszähler (6) ist, dessen Zählerstand durch die Zahlenwerte jeweils erhöht wird und der gemäß der Funktion rückgezählt wird.

3. Antiblockierregelsystem nach Anspruche 1 oder 2, dadurch gekennzeichnet, daß die Zahlenwerte Konstant sind.

4. Antiblockierregelsystem nach Anspruche 1 oder 2, dadurch gekennzeichnet, daß die Zahlenwerte variable sind und z.B. von der Fahrzeugverzögerung abhängen.

5. Antiblockierregelsystem nach einem der Ansprüche 1—4, dadurch gekennzeichnet, daß die Erniedrigung linear erfolgt.

6. Antiblockierregelsystem nach Anspruch 5, dadurch gekennzeichnet, daß bei vorgegebenen Situationen (z.B. zwei Räder weisen einen hohen Schlupf auf) die lineare Erniedrigung durch Konstanthaltephasen unterbrochen wird.

7. Antiblockierregelsystem nach einem der Ansprüche 1—6, dadurch gekennzeichnet, daß der Summenwert durch Beschleunigungn an mehreren Rädern erhöhrt wird.

8. Antiblockierregelsystem nach einem der Ansprüche 1—7, dadurch gekennzeichnet, daß aus gewichteten Signalen der Radverzögerung und des Schlupfs ein Summensignal gebildet wird und daß dessen Schwelle variiert wird.

**Revendications**

1. Système de réglage anti-blocage avec des émetteurs de valeur de mesure, un circuit d'exploitation et un dispositif de commande de pression de freinage, qui assure une variation de la pression de freinage en fonction de la façon dont se meuvent les roues, système dans lequel les abaissements de la pression survenant du fait de décélérations et d'accélérations des roues se produisant en successions rapides sont rendus plus difficiles en ce que les seuils pour cet abaissement de la pression sont augmentés en fonction de l'accélération des roues, système caractérisé en ce qu'il est prévu un organe de totalisation (6) auquel est appliquée, respectivement lors de l'intervention d'une accélération de roue ayant au moins une importance prédéfinie, une valeur de comptage après détection d'une instabilité, ces valeurs de comptage étant totalisées et la valeur calculée correspondante étant abaissée selon une fonction prédéfinie, tandis que l'importance de la somme respectivement obtenue constitue une mesure du niveau des seuils pour l'abaissement de la pression déclenché par la décélération et/ou le glissement des roues.

2. Système de réglage anti-blocage selon la revendication 1, caractérisé en ce que l'organe de totalisation est un compteur régressif (6) dont l'état de comptage est respectivement augmenté par les valeurs de comptage et qui est ramené en arrière, conformément à la fonction prédéfinie.

3. Système de réglage anti-blocage selon la revendication 1 ou la revendication 2, caractérisé en ce que les valeurs de comptage sont constantes.

4. Système de réglage anti-blocage selon la revendication 1 ou la revendication 2, caractérisé en ce que les valeurs de comptage sont variables et dépendent, par exemple, de la décélération du véhicule.

5. Système de réglage anti-blocage selon une des revendications 1 à 4, caractérisé en ve que l'abaissement s'effectue de façon linéaire.

6. Système de réglage anti-blocage selon la revendication 5, caractérisé en ce que, pour des situations prédéfinies (par exemple deux roues comportent un glissement élevé), l'abaissement linéaire est interrompu par des phases de maintien à une valeur constante.

7. Système de réglage anti-blocage selon une des revendications 1 à 6, caractérisé en ce que la valeur cumulée est augmentée par des accélérations sur plusieurs roues.

8. Système de réglage anti-blocage selon une des revendications 1 à 7, caractérisé en ce qu'un signal de totalisation est formé à partir des signaux pondérés de la décélération des roues et du glissement, et que son seuil est modifié.

**Claims**

1. Anti-locking control system having measured-value transmitters, an evaluation circuit and a brake-pressure control arrangement which effect a variation of the brake pressure as a function of the wheel movement behaviour, pressure reductions which occur due to wheel retardations and wheel accelerations occurring in rapid succession being rendered more difficult by the thresholds for the pressure reduction being raised as a function of the wheel acceleration, characterized in that a summing element (6) is provided to which a numerical value is in each case fed when a wheel acceleration of at least a predetermined magnitude occurs, after the detection of an instability, in that these numerical values are added up and the respective cumulative value is reduced in accordance with a predetermined function and in that the magnitude of the sum in each particular case represents a measure for the level of the thresholds for the pressure reduction triggered by wheel retardation and/or wheel slip.

2. Anti-locking control system according to Claim 1, characterized in that the summing element is a down counter (6), the counter contents of which are in each case increased by the numerical values and which is counted down in accordance with the function.

3. Anti-locking control system according to Claims 1 or 2, characterized in that the numerical values are constant.

4. Anti-locking control system according to Claims 1 or 2, characterized in that the numerical values are variable and depend, for example, on the vehicle retardation.

5. Anti-locking control system according to one of Claims 1—4, characterized in that the reduction is linear.

6. Anti-locking control system according to Claim 5, characterized in that, in predetermined situations (e.g. two wheels have a high slip), the linear reduction is interrupted by phases of holding constant.

7. Anti-locking control system according to one of Claims 1—6, characterized in that the cumulative value is increased by accelerations at several wheels.

8. Anti-locking control system according to one of Claims 1—7, characterized in that a composite signal is formed from weighted signals of the wheel retardation and of the slip and in that its threshold is varied.

Bereich 1
Schlechtwegstrecke

Bereich 2
Homogene
Fahrbahn

v

Rad 2

Rad 1

FIG.1a

t

Zählerinhalt

FIG.1b

t

P Rad 1

FIG.1c

t

*FIG. 2*

*Fig.3*

2